# EUROPEAN PATENT APPLICATION

(11) **EP 1 791 318 A2**
(43) Date of publication of application: **30.05.2007**
(21) Application number: 06077046.8
(22) Date of filing: 17.11.2006
(51) Int. Cl.: H04L 29/06

(54) **Media distribution system**

(30) Priority: 28.11.2005 US 287963
(71) Applicant: Delphi Technologies, Inc., Troy, Michigan 48007 (US)
(72) Inventor: Welk, Douglas L., Rossville, IN 46065 (US); Szczublewski, Francis E., Macomb, MI 48044 (US); Jalics, Laci J., Ray, MI 48096 (US); Toms, Mona L., Carmel, IN 46032 (US)
(74) Representative: Denton, Michael John

(57) **Abstract**

A media storage system (10), and method for carrying out same, including a media storage device (10) including a microprocessor (18) coupled to a storage member (12), wherein the storage member (12) includes a protected portion (14) and an unprotected portion (16), and at least one channel (26, 27) adapted to receive pushed content (26) wherein the microprocessor (18) is coupled to the at least one channel for transferring the pushed content (26) to the protected portion (14) of the storage member (18).

## Description

### TECHNICAL FIELD

This invention generally relates to media distribution systems and more particularly relates to systems for collecting, storing, recalling and playing music content.

### BACKGROUND OF THE INVENTION

Market research confirms that drivers utilize broadcast radio as a primary source of listening entertainment even though many other entertainment sources are available at their disposal while operating the vehicle. Researchers believe that one of the primary reasons for this is the musical spontaneity that results from listening to broadcast radio. Many people reminisce about their first encounter with a favorite song, album, or artist while listening to broadcast radio. Also, memories of significant events are often linked to songs.

Several portable devices are currently marketed which have the ability to store mass amounts of music content. These devices typically employ a hard disk drive (HDD) for storing music libraries consisting of tens of thousands of songs. Although these systems have the ability to store vast quantities of music, they do not offer the same content spontaneity that is available from broadcast radio. This is primarily because each song stored on the mass storage device was probably placed there by the user and the songs are likely to be part of the user's music library stored on their home PC. The stored songs are therefore not "new." Additionally, music content stored on the device tends to get "stale" unless it is frequently updated.

Some of these HDD storage devices also utilize a wireless LAN or a IEEE Std. 802.11 (hereinafter 802.11) network to conveniently load content onto the HDD device. Although this wireless interface makes it convenient to connect to a network to download music content (from a PC, the internet, or the like), mobile applications can also utilize many publicly accessible 802.11 hotspots to download content through the internet. A cellular telephone network may also be used as a link for downloading content.

In an embodiment, the present invention provides a mechanism to allow users to listen to personalized music content stored on local storage device while still offering a degree of music spontaneity associated with broadcast radio.

### BRIEF DESCRIPTION OF THE DRAWINGS

FIG. 1 is an example of one possible application of the present invention as a device that is useable within a vehicle, but yet is also useable remotely from the vehicle;
FIG. 2 is a schematic diagram of an embodiment of the system of the present invention;
FIGS. 3A-3C are logic flow diagrams of an embodiment of the methodology employed by the present invention;

### DESCRIPTION OF THE PREFERRED EMBODIMENTS

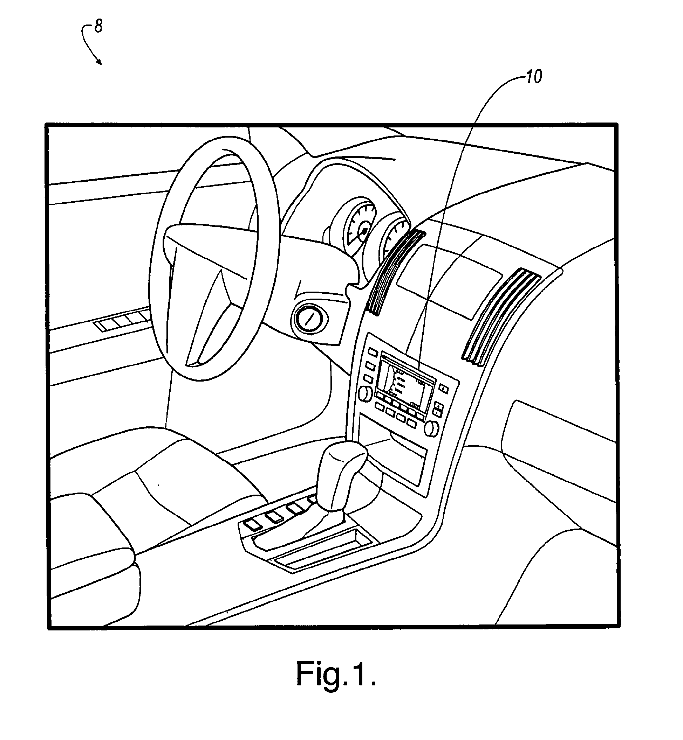

Figure 1 depicts one possible use for the present invention. In this application, vehicle 8 is provided with media storage device 10. Media storage device 10 can be fitted into a predetermined slot in the dash panel of vehicle 8 as a permanent fixture. However, it is also contemplated that media storage device 10 can be removable from the vehicle dashboard so that it can function remotely.

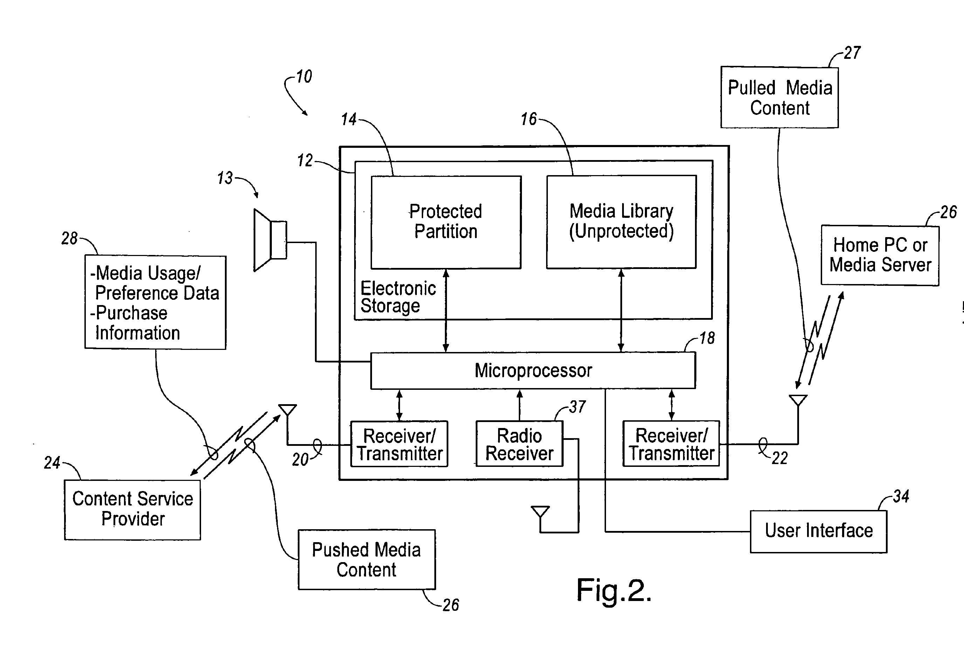

Now referring to Figure 2, media storage device 10 may include, amongst other components, electronic storage member 12 which may be comprised of a hard drive (HDD), semiconductor memory devices, or any other medium suitable for storing electronic information. Electronic storage 12 may be partitioned in to at least two segments -- a protected segment 14 and an unprotected segment 16. Protected partition 14 is any form of electronic storage that is not directly accessible by the user. Thus, protected partition 14 forms the area of electronic storage where the music content is stored for free trial by the user. Media library 16 is "unprotected" because it represents the stored music content that the user has paid for and now owns the right to access and play. Typically, protected partition 14 only serves to store music content for a short period (temporary storage) until the user decides whether or not to purchase the music content. Once the decision is made by the user to purchase the memory content stored on protected portion 14, it is transferred to media library 16 where it is stored on a long term basis (i.e. until the user decides to delete or otherwise remove the music content). The music content stored on electronic storage 12 is accessible by microprocessor 18. Microprocessor 18 is adapted to receive music content from at least one music content channel 20,22. The at least one music content channel 20,22 is adapted to receive music content from at least a content service provider 24 or a home PC or media service provider 26. Although at least one content channel 20,22 is shown in Figure 2 as two distinct channels, it is contemplated that the services provided by provider 24 or server 26 could both be provided from a single source and could be communicated with microprocessor 18 over a single channel. Accordingly, two media content channels 20,22 are shown and two providers/servers (24,26) are shown only to assist in understanding the concepts underlying the present invention.

Channels 20,22 can be implemented using any number of communication technologies known to those skilled in the art. For example, channels 20,22 could be implemented over a wireless telephone link, an 802.11 link, through a low bit-rate background channel on satellite digital radio (e.g. SDARS), high definition-radio (HD radio), or any other wired or wireless communication link.

Media storage device 10 may be permanently mounted within a vehicle or it may be portable (removable from the vehicle) so that it can be used both within a vehicle and at any location removed from the vehicle. Although media storage device 10 may be a device which is solely dedicated to the task of storing and playing delivered content, it is also contemplated within the scope of this invention that any type of electronic device may be used, in part, as a portable media storage device 10 including, but not limited to, a general purpose computer (desktop or laptop), a cellular phone, a PDA, a radio, or the like. Media storage device 10 is adapted to accept music content delivered along channel 22 from the home PC of the user or any other suitable media server capable of delivering music content. Channel 22 may be a wired or a wireless channel. Other possible media servers 26 include other media storage devices 10, the internet, or the like. The downloading of media content delivered from server 26 is typically initiated by the user of storage device 10, and is thus known as "pulled" media content. "Pulled" content is directed to and stored within the unprotected segment 16 of electronic storage member 12 by microprocessor 18. "Pulled" content can be directly accessed by a user without restriction.

The downloading of media content from provider 24 is known as "pushed" content because its transfer is initiated by provider 24 (not device 10). The protected segment 14 of electronic storage medium 12 is set aside for storing "pushed" 26 media content that originates from content service provider 24. "Pushed" content can not be directly accessed by the user. Content service provider 24 may download (i.e. "push") new music to protect segment 14 of storage member 12 by any one of the communication transmission mechanisms discussed above without any initiation mechanism from device 10. The music content stored on protected segment 14 not only includes songs, but also may include album name, artist name, genre, and other information associated with the songs stored in protected segment 14 of storage member 12. The download of "pushed" content may also come by way of home PC/media server 26. In this embodiment, the content service provider 24 would "push" the content to the home PC 26. From there, it would be "pulled" to device 10 (perhaps along with other selected content) during a next synchronization operation.

Any number of schemes can be used to select the categories of media content "pushed" by content service provider 24 onto storage device 10. For example, one simple approach is to use content service provider 24 to randomly select the music content pushed to media storage device 10. However, more sophisticated techniques can be used in an attempt to more accurately anticipate the listening preferences of the user. For example, media usage/preference data 28 (and associated statistics) can be collected by microprocessor 18 and passed to content service provider 24. Media usage/preference data can include all types of information which categorizes the listening preferences of the user. Such categories may include the names of frequently selected albums, artists, music genres, or frequency of selection of (or duration of listening time devoted to) broadcast stations listened to by the user on radio receiver 37. This information can be used by content service provider 24 to select the "pushed" content that is most likely to appeal to the user.

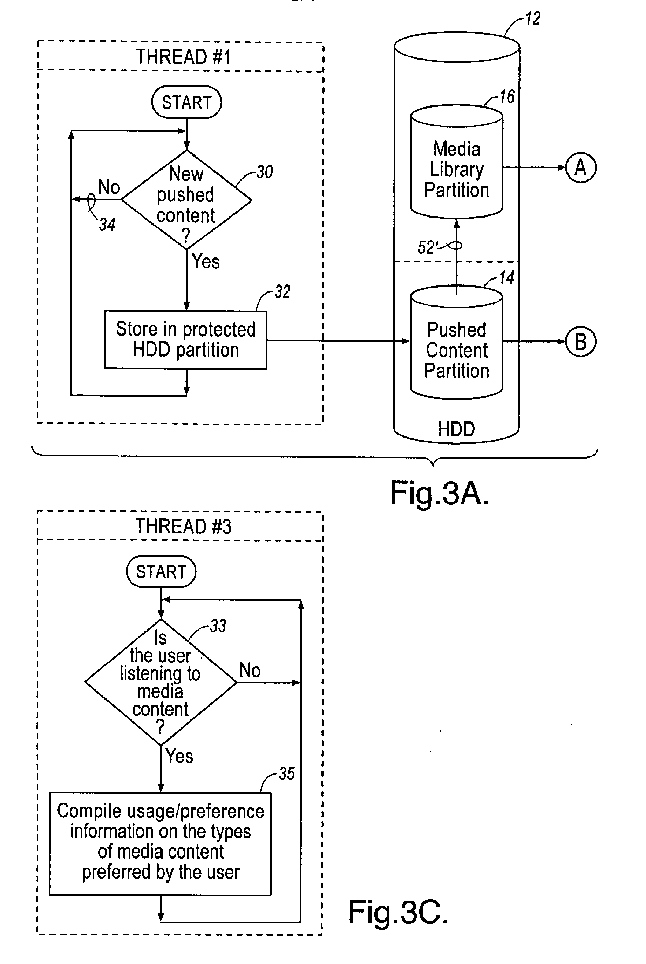

Now referring to Figures 3A-3C, the methodology of the present invention may be carried out in separate tasks (i.e. Threads) implemented in software which is executed by microprocessor 18. In a first thread (Thread 1), microprocessor 18 monitors content transmitted over channel 20 to determine if content service provider 24 is "pushing" media content 26. If new "pushed" content 30 is available from content service provider 24, microprocessor 18 accepts the content 30 and stores 32 the new content onto protected segment 14 of storage member 12. If there is no new content "pushed" from content service provider 24, Thread 1 simply loops back 34 to continually poll content channel 20 for the presence of new "pushed" content.

In a second task (i.e. Thread 2), an appropriate user interface 34 is continually polled to determine if the user has elected to generate a playlist 36. If the user has not elected to generate a playlist 38, Thread 2 simply loops back to continually poll user interface 34. Once the user does elect to generate a playlist 40, a playlist may be generated 42 by allowing the user to browse the content of unprotected media library 16 and to select the desired songs to place in the playlist. Once the playlist is completed, a song in the playlist may be read from media library 16 and played 44 and to play the "pushed" song interspersed with the songs played from the playlist. Any number of techniques may be used to determine when to play 48 a "pushed" song 46. One such technique may include using microprocessor 18 to randomly select and to play the "pushed" song. Another technique is to allow a user to program the frequency in which a "pushed" song is to be played (such as every tenth song, five times a day, etc.). It is also important to note that the playing of a "pushed" song does not have to be tied with the songs played from a playlist. For example, the user could be made aware that a "pushed" song is available and then could be given the option to play the "pushed" song. If a "pushed" song is elected by the user (or otherwise scheduled for play) 46, the "pushed" song is read from the "pushed" content portion 14 of storage member 12 and is played 48 over one or more speakers 13.

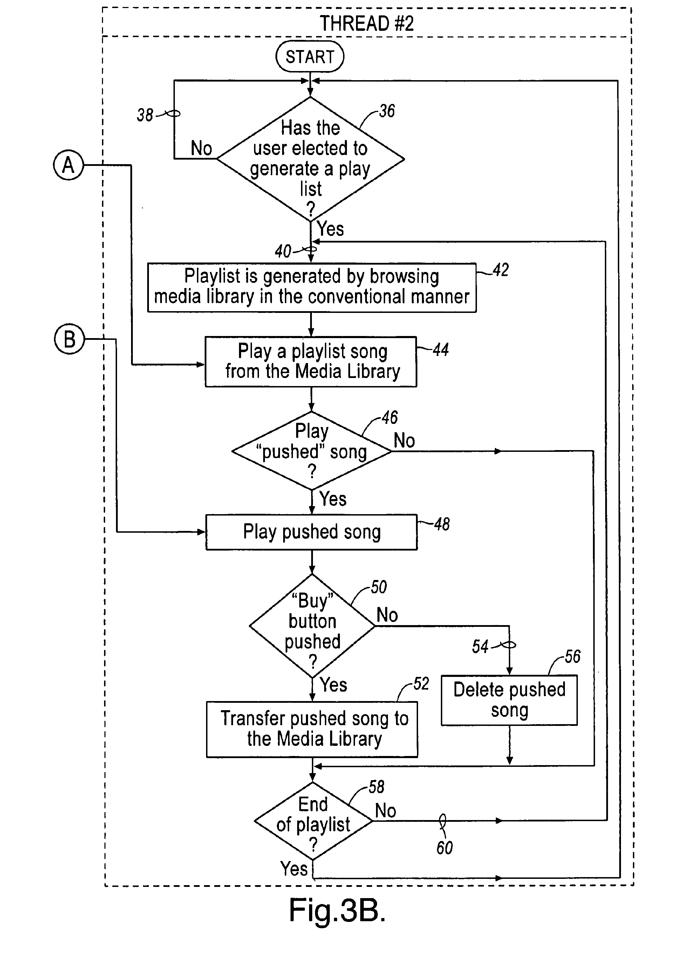

In an optional embodiment, after a "pushed" song is played 48, the user may be prompted to purchase the "pushed" song 50. If the user elects to purchase the "pushed" song, the song is transferred 52' from protected partition 14 of storage member 12 to media library partition (unprotected) 16 of storage member 12. This transfer is graphically represented by reference numeral 52' in Figure 3. Except for the option of purchasing a "pushed" song, the user does not otherwise have access to the music content stored in protected partition 14.

If the user does not elect to purchase a "pushed" song 54, the song may be deleted 56 from the protected partition 14 of storage member 12. The "pushed" song may be deleted 56 from the partition portion 14 immediately after the user declines to listen to it, or, in an alternative embodiment, the user may be given several chances to listen to the song before it is deleted. Once all of the songs in the playlist have been played 58, control is transferred to logic step 36. If unplayed songs remain in the playlist, control is transferred to logic block 44 where the next song in the playlist is selected and played.

In a third task (i.e. Thread 3), a software routine continually monitors the user's listening habits 33. If the user is listening to media content 33, Thread 3 compiles information on the styles of media content preferred by the user 35 and makes this compiled information available to content service provider 24 in the form of media usage/preference data 28. Purchase information (if the user wishes to purchase a "pushed" song 50) can also be transmitted to content service provider 24 in this same way. Compiled information 35 may be derived from the media content stored on unprotected partition 16. Additionally, more sophisticated schemes may also be used to compile information 35 such as monitoring the broadcast radio stations (and the music genre transmitted thereby) that the user listens to. Additionally, information may be compiled on the user's listening habits as they relate to playlist songs. Specifically, the number of times a song on a playlist is "skipped over" by a user or "repeated" by a user renders valuable information on the user's listening preferences. In order to monitor the broadcast radio stations to which the user listens, a radio receiver 37 may be coupled to microprocessor 18 so that microprocessor 18 can compile 35 the appropriate statistics. Of course SDARS, HD radio, or any other source of incoming music content may also be monitored by microprocessor 18 in order to compile information 35 on the types of media content preferred by the user.

Having described embodiments of the present invention, it will be understood that various modifications or additions may be made to the embodiments chosen here to illustrate the present invention, without departing from the spirit of the present invention. For example, the methodology of the present invention has been set forth herein in the context of threads or tasks. Although the use of the terms "threads" or "tasks" has been used to described the methodology of the present invention, these terms have been chosen because they lend themselves to describe the methodology of the present invention in a straight forward manner. However, these terms are not meant to restrict the implementation of the present invention to a processor which is capable of performing multitasking. It is contemplated that the present invention can be implemented in a microprocessor which is not capable of multitasking by simply carrying out each of the methods set out in Threads 1, 2, and 3 as part of a single program. Accordingly, it is to be understood that the subject matter sought to be afforded protection hereby shall be deemed to extend to the subject matter defined in the appended claims, including all fair equivalents thereof.

## Claims

1. A media distribution system, comprising:
a media storage device (10), including a microprocessor (18) coupled to a storage member (12), wherein said storage member (12) includes a protected portion (14) and an unprotected portion (16),
at least one channel (20,22) adapted to receive pushed content (26), wherein said microprocessor (18) is coupled to said at least one channel (20,22) for transferring said pushed content (26) to said protected portion (14) of said storage member (12).

2. The media distribution system of claim 1, wherein said microprocessor (18) is adapted to transfer pushed content (26) from said protected portion (14) of said storage member (12) to said unprotected portion (16) of said storage member (12).

3. The media distribution system of claim 1, wherein said at least one channel (20,22) includes at least one of a 802.11 channel, a SDARS channel, or a HD-Radio channel.

4. The media distribution system of claim 3, wherein said at least one channel (20,22) includes a low bit-rate background channel portion of a 802.11 channel, a SDARS channel, or a HD-Radio channel.

5. The media distribution system of claim 1, wherein said at least one channel (20,22) is adapted to receive pulled media content (27) from a media server (26).

6. The media distribution system of claim 5, wherein said microprocessor (18) is adapted to receive said pushed media content (26) from a content service provider (24) wherein said media server (26) and said content service provider (24) are separate servers.

7. The media distribution system of claim 5, wherein said at least one channel (20,22) is used by said microprocessor (18) to convey information to a content service provider (24) or a media server (26) relating to a user's listening preferences (28).

8. The media distribution system of claim 7, wherein said listening preference information (28) conveyed by said microprocessor (18), includes frequency and duration in which a user listens to a music genre.

9. The media distribution system of claim 8, wherein said listening preference information (28) includes a purchase request (50) of a user to purchase pushed content.

10. The media distribution system of claim 7, wherein said media storage device further includes a radio receiver (37), wherein said microprocessor (18) compiles said listening preferences (28) from content selection preferences made by said user from a source of at least one of a broadcast radio station received by said radio receiver (37), or media content stored in said unprotected portion (16) of said storage member (12).

11. A method of distributing media content, comprising the steps of:
a) playing media content (44) from a first device,
b) monitoring at least one type of media content preferred by a user,
c) pushing media content (30) to said first device from a second device, wherein said pushed media content is a type of media content preferred by said user.

12. The media distribution system of claim 11, wherein step B) further includes compiling information (35) relating to a type of media content preferred by said user and, transferring (28) said compiled information to said second device (24).

13. The media distribution system of claim 11, wherein step C) further includes storing (52) said pushed media content on a protected portion (14) of a storage member (12) associated with said first device (10).

14. The media distribution system of claim 1, wherein step C) further includes pushing (26) media content (30) using at least one of a 802.11 channel, a SDARS channel, or a HD-Radio channel.

15. The media distribution system of claim 14, wherein said pushing further includes pushing media content (30) along a low bit-rate background channel (26) associated with at least one of said 802.11 channel, a SDARS channel, or a HD-Radio channel.

16. The media distribution system of claim 11, further including the step of:
d) pulling media content (27) from a media server (26).

17. The media distribution system of claim 16, further including storing said pulled media content (27) on a non-protected portion (16) of a storage member (12) associated with said first device (10).

18. The media distribution system of claim 13, further including transferring (52') media content stored on said protected portion (14) of said storage member (12) to a non-protected portion (16) of said storage member (12).

19. The media distribution system of claim 18, wherein the transferring (52') takes place in response to a user affirmatively electing to purchase media content stored on said protected portion (14) of said storage member (12).

20. The media distribution system of claim 11, wherein said media content pushed to said first device (10) is played (44) by interspersing it with a playlist (42) of media content compiled by the user.
